# EUROPEAN PATENT APPLICATION

(11) **EP 1 746 517 A2**
(43) Date of publication of application: **24.01.2007**
(21) Application number: 06117377.9
(22) Date of filing: 18.07.2006
(51) Int. Cl.: G06F 17/22

(54) **XPath automaton systems and methods**

(30) Priority: 19.07.2005 US 184484
(71) Applicant: Xerox Corporation, Rochester, NY 14644 (US)
(72) Inventor: Roux, Claude, 38100, Grenoble (FR)
(74) Representative: Grünecker, Kinkeldey, Stockmair & Schwanhäusser Anwaltssozietät

(57) **Abstract**

Embodiments herein analyze at least one extensible markup language (XML) application to produce a listing of extensible markup language path language (XPath) strings produced by the application. These XPath strings are then processed to create one or more underspecified XPath (USXP) strings. The USXP strings are "underspecified" because each includes one or more variables. An XML document can be indexed using the USXP strings to produce an automaton. Then, upon receiving an XPath query, the embodiments herein can process the XPath query through the automaton to determine if the XPath query matches an XPath string of said automaton.

## Description

### BACKGROUND

Embodiments herein generally relate to managing documents, such as XML documents, and more particularly to processing queries against XPath strings.

The utilization of natural language tools to extract salient information from large database of documents has become now more and more widespread. However, one of the main obstacles in the use of these tools is the necessity to quickly adapt these programs to new domains. New domains often mean specialized lexicons were specific words and terms are stored with some distinctive features for the grammar to exploit. However, in most systems, the lexicons are often either pre-compiled as a transducer or available in an awkward format which makes the quick addition of new words pretty difficult. Furthermore, the modification of these lexicons is often a source of side-effects which are inherently difficult to appreciate from a naïve user point of view. In most cases, these lexicons are static as they can only be modified beforehand, offering little if no possibility to add new words or terms during the process. This is the case for most parsers, where the trade-off is between a fast but limited dictionary access and large but slow dictionaries. Furthermore, the sort of information that is accessible during the analysis is usually limited to only lexical information.

There exists today a wide variety of tools to simplify the task of managing XML documents. Languages such a XSLT have been defined to access XML nodes in documents in order to apply complex reshuffling scripts to automatically transform an XML document into another XML document. Tools have also been defined such as XQuery, to consider an XML document as a sort of database where information can be extracted through complex expressions based on mark up tags and attribute values. All these languages have in common the use of XPath expressions, which could be roughly defined as a path that links the root tag of a document with any of its siblings. The XPath language also provides some methods which can be used to describe the siblings of a given node through their position in the tree compared to the current node.

### SUMMARY

Embodiments herein analyze at least one extensible markup language (XML) application to produce a listing of extensible markup language path language (XPath) strings produced by the application. These XPath strings are then processed to create one or more underspecified XPath (USXP) strings. The USXP strings are "underspecified" because each includes one or more variables. An XML document can be indexed using the USXP strings to produce an automaton. Then, upon receiving an XPath query, the embodiments herein can process the XPath query through the automaton to determine if the XPath query matches an XPath string of said automaton.

The indexing of the XML document produces an index within the automaton and the embodiments herein reference the index of the automaton to reveal matching XML document nodes corresponding to a string within the automaton matching the XPath query. The indexing associates one or more marking objects with each of the variables within the USXP strings. The marking objects comprise node data that the variables represent. The processing of the XPath query through the automaton substitutes the marking objects for the variables. These variables can, for example, comprise meta-variables.
In one embodiment of the method of claim 8, said indexing of said XML document produces an index within said automaton.
In a further embodiment the method further comprises referencing said index of said automaton to reveal matching XML document nodes corresponding to an XPath string within said automation matching said XPath query.
In a further embodiment said indexing associates one or more marking objects with each of said variables within said USXP strings, wherein said marking objects comprise node data that said variables represent.
In a further embodiment said processing of said XPath query through said automaton comprises substituting said marking objects for said variables.
In a further embodiment said variables comprise meta-variables.
In one embodiment of the method of claim 10, said processing of said query through said automaton comprises determining if said query matches a string within said automaton. In a further embodiment said indexing of said document produces an index within said automaton.
In a further embodiment the method further comprises referencing said index of said automaton to reveal matching document nodes corresponding to a string within said automaton matching said query.
In a further embodiment said indexing associates one or more marking objects with each of said variables within said underspecified strings, wherein said marking objects comprises node data that said variables represent.
In a further embodiment said processing of said query through said automaton comprises substituting said marking objects for said variables.

These and other features are described in, or are apparent from, the following detailed description.

### BRIEF DESCRIPTION OF THE DRAWINGS

Various exemplary embodiments of the systems and methods described in detail below, with reference to the attached drawing figures, in which:
FIG. 1 is a flow diagram of embodiments herein;
FIG. 2 is a flow diagram of embodiments herein; and
FIG. 3 is a flow diagram of embodiments herein.

### DETAILED DESCRIPTION

The use of XPath to query an XML document is now a central issue in many applications. XPath is in the core for instance of XSLT and XQuery which all focus on the management of XML documents. The main drawback to the use of XPath is the inherent slowness of most implementation of the formalism. The cost of parsing and running an XPath makes it difficult to deal with in industrial environments where speed is often a major issue.

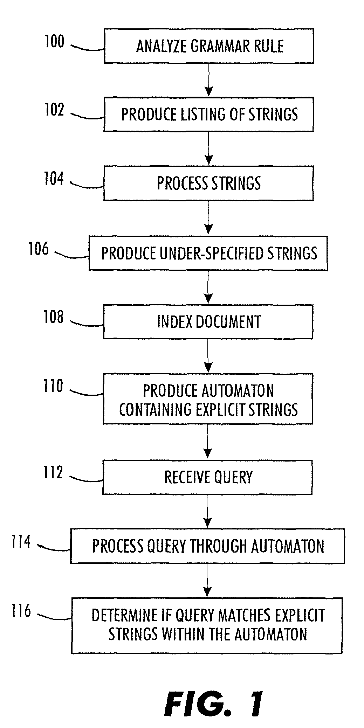

As shown in Figure 1, embodiments herein analyze (in item 100) at least one grammar rule (e.g., an extensible markup language (XML) software application) to produce a listing of strings produced by the grammar rule or parser (e.g., extensible markup language path language (XPath) strings produced by the application) in item 102. These strings (e.g., XPath strings) are then processed (104) to create one or more underspecified strings, such as underspecified XPath (USXP) strings (106). These strings are "underspecified" because each includes one or more variables. In other words, these underspecified strings are "implicit" strings because they contain variables and are contrasted with "explicit" strings that contain values instead of the variables included within the implicit, underspecified strings.

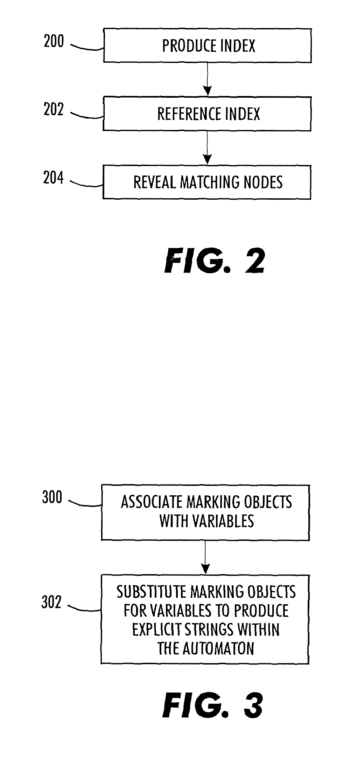

A document (e.g., XML document) can be indexed (108) using the underspecified strings to produce an automaton (110). As shown in Figure 3, discussed below, the automaton includes explicit strings that contain values in place of the variables in the underspecified strings. Then, upon receiving a query (e.g., an XPath query) in item 112, the embodiments herein can process the query through the automaton (114) to determine if the query matches one of the explicit strings within the automaton (116).

As shown in Figure 2, the indexing of the document (108) produces an index (200) within the automaton and the embodiments herein reference the index of the automaton (202) to reveal matching document nodes corresponding to explicit strings within the automaton that match the query (204). As shown in Figure 3, the indexing associates one or more marking objects with each of the variables within the underspecified strings (300). The marking objects comprises node data that the variables represent. The processing of the XPath query through the automaton (114) substitutes the marking objects for the variables to produce the explicit strings within the automaton (302). These variables can, for example, comprise meta-variables.

In one example, USXP are applied on an XML document. The result of applying these USXPs is a set of strings which corresponds each to a full XPath. This set of XPath is then stored into the automaton together with the XML node positions which would have been returned if this XPath would have been applied to the document. In this example, the USXP is /Root/Node[@att=A], where "A" is a variable. If this is applied to the USXP to the following XML document:

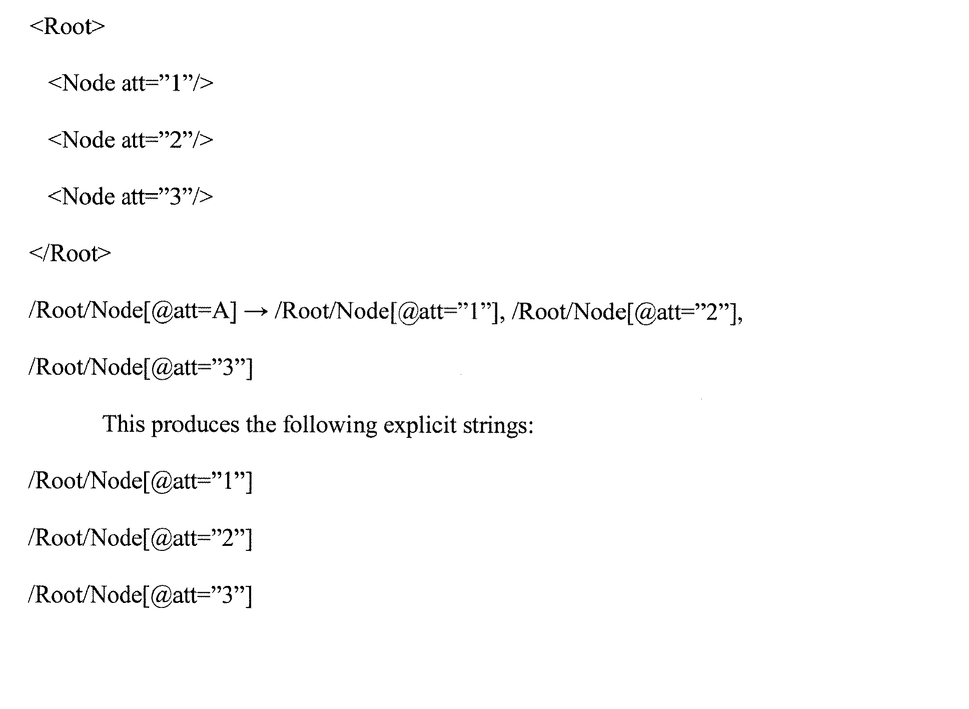

Each of these strings is a full XPath which corresponds to one of the above XML nodes. These strings are stored in the automaton together with the index of the actual XML node they refer to. The application of the USXP yields both the explicit strings and the indexes of the actual nodes.

Thus, embodiments herein provide a way to use external data within a given document grammar. The problem was to find a structure which would be both universal and versatile so that any grammar could be used on the spot, and any users would be able to enrich the grammar with any sort of information. XML quickly appeared as being a good solution for the needs, as this formalism offers a text format which can be both readable (to a certain extent) by a human being and still manageable by a computer. The methods disclosed herein have modified the formalism so that any information from an XML document could be, at will, analyzed as a category, a feature or a lemma. In other words, an XML document can be used as a database, and each of its data can be embedded into the very grammatical structure of the sentences that embodiments herein analyze.

Embodiments herein have enriched the formalism with new instructions which are used to retrieve XML nodes on the basis of an XPath. This XPath is built with the help of specific information from the grammar at a certain stage, such as the lemma or the surface form of a word, the category or the features of a given syntactic node. This XPath is then tested against the XML file (there could be more than one file checked at a time) to check if a given XML node with a specific mark up tag constrained with specific attributes does actually exist. Embodiments herein offer some specific instruction to extract some data from that XML node. One example is based on the following XML database:

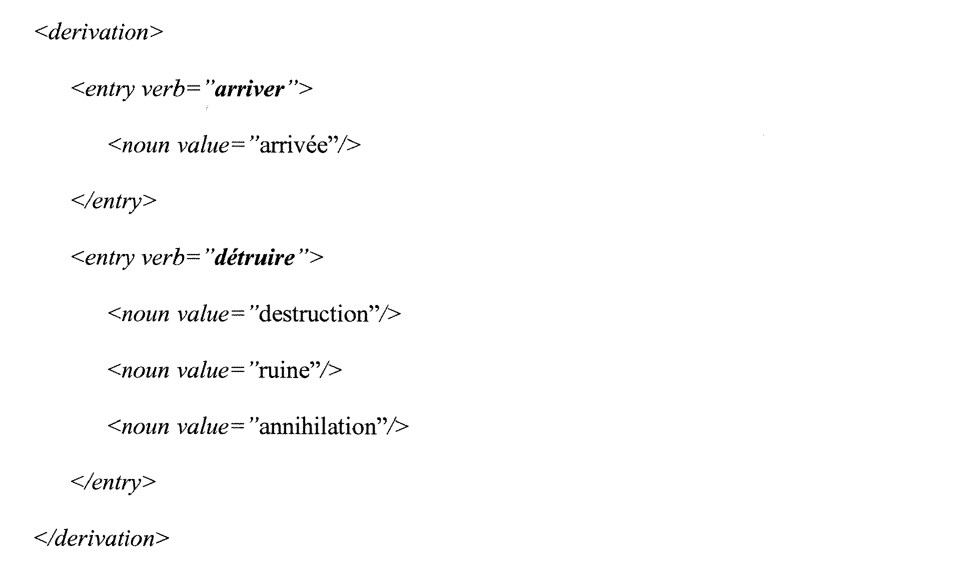

One purpose of this XML *database* is to encode the noun derivation of a given French verb. This is especially useful in the case of a normalization procedure, where all possible interpretations of a given sentence are normalized into one single set of dependencies (see Brun & Al. [15]). Let's take an example in French: *Le train arrive en gare. (The train arrives in the train station)* We could replace this sentence with a nominalization of that sentence: *l'arrivée du train en gare (The arrival of the train in the station).* The database can then be queried to provide a noun for that particular verb. A XPath can then be created that would query this database with the verb *arriver* as a seed. For instance, we could use the following XPath to return the correct value: /normalization/entry[@verb="arriver"]/noun.

This disclosure provides a specific set of instruction which is directly mapped over the XPath. For instance, one may test or create an XML node, or simply extract some specific attribute values. More than one database may be available at a time; each is then identified with a simple alias that is associated at loading time. Below is a list of simple instructions that are used to create, test or extract specific attribute values. In each case, *@db* refers to the XML document that has been loaded with the *db* alias.

| | |
|---|---|
| @db(/root/name[@val=1])->Create() | *creates a new XML node which corresponds to that XPath* |
| @db(/root/name[@val="1"])->Test() | *tests if this XPath corresponds to an existing XML node* |
| @db(/root/name)->GetAttribute(value,"val") *gets the value of the val attribute from this XML node* | |
| @db(/root/name)->SetAttribute("val",value) *sets the value of the val attribute on this XML node* | |

All these instructions can be freely mixed with other grammatical information. For instance, the instruction below gets its value from a syntactic node to test its existence:

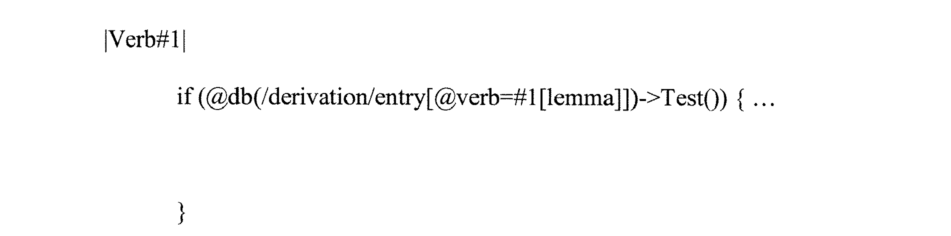

This instruction reads: *for each* VERB *in the sentence (associated with the variable* #1*) we test if there exists an XML node in our database that would have the same lemma as our* VERB *(#1[lemma] automatically returns the lemma of our syntactic node).*

One advantage of this system is that it lets a user freely define whatever DTD the user judges suitable for his specific linguistic problem. With this method, any sort of data can be made available for any linguistic tasks, without any constraints on their nature, their content or their organization.

However, the size of these files may be quite huge in memory. The speed of an XPath evaluation is often very slow, even on fast computers. The larger the XML file, the worst the performance. If size is quite often an annoyance, computer memories have increased in such way in the last years, that it is no longer a real issue. On the other hand, speed is a real issue. Embodiments herein use a library *libxml* that has been specially designed to run XPath as fast as possible, nonetheless when an XML document is large, even on a fast machine, the execution of a single XPath may require significant time (e.g., 1 to 10 ms), which is very slow when, for each sentence, more than one XPath is executed at a time. The main reason to explain this inherent slowness is the necessity of completeness. The system must traverse the complete file to verify if all XML nodes have been correctly assessed. If the file is very large, the time needed can simply be overwhelming.

Since XPath is a central component in most XML systems today, it is not surprising that a lot of research have been conducted to deal with this problem. Some of these solutions focus on the best way to analyze an XPath, while other solutions propose some ways of indexing XML documents in order to apply the XPath on the indexes rather than on the whole file. However, their solutions are often complex. Thus, embodiments herein provide a simple but efficient method to index an XML document on the basis of the XPaths that are present in the script instructions.

In embodiments herein, grammar is considered to be a static object, in the sense that when a grammar is executed on a given text, it can be known from its design that no rule is added on the fly to the current grammar. From this weak assumption, we deduce that all XPath instructions are known at run time. The embodiments herein do not index the XML database document on all XPaths, but only those in canonical form. Canonical form XPaths are those which do not comprehend any specific inner instructions such as *daughter, parent* etc. However, in the script language, some of these XPaths may have some specific gaps and may not be full XPath expressions. Indeed, an expression which would require some linguistic data to be complete may only be known at run time. An example follows.

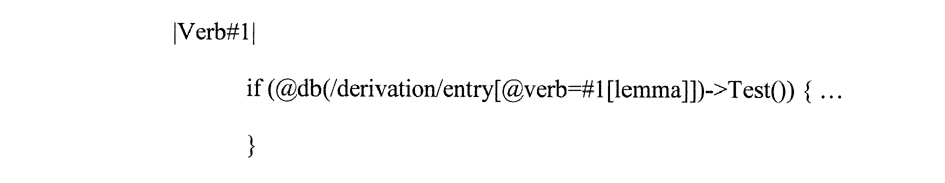

In this example, the XPath:/*derivation*/*entry[@verb=#1[lemma]]* requires the *lemma* form of the syntactic node *#1* to be known in order to be complete.

The embodiments herein consider XPaths as *strings of characters.* This improves the speed of the system by caching XPath instructions, so that embodiments herein will be prevented from executing slow and costly XPath evaluations. Since, all XPaths are known beforehand, we can infer that their string form will be the same throughout the analysis. If the same verb lemma is found again and again, the XPath string that would be produced by the above rule will be the same in every case.

Embodiments herein provide an index on the strings that are produced by the application of the rules. When a rule applies that is based on an XPath, an XPath string is produced on the basis of the linguistic information and this string of character is then tested against the index to see whether it had already been evaluated. If it is the case, the index returns the XML node corresponding to that string or that XPath.

There are, of course, many methods to index an XML document despite the fact that all XPaths would not be fully known beforehand. One is to store in an index the different XPaths on the fly. In other words, for every new XPath that would be computed on a given sentence, there would be first a test on the index and if the index does not return any answer, then the system would proceed with an actual XPath evaluation. However, this system would be very efficient for an already evaluated XPath, but would be very inefficient for any new XPath.

The other possibility is to first fetch all the valid XPaths expressions in a given grammar and replace the dynamic parts in those strings, the part that is based on linguistic data for instance, by a meta-variable. Thus, embodiments herein have modified the libxml XPath evaluation module so that these meta-variables may be detected and recognized by the engine. When one meta-variable is evaluated, the XPath engine does not test the value of that node or of that attribute, which would be its regular behavior, but stores on the current XML node an object that contains an evaluation of that meta-variable. Once the whole XML document has been traversed, embodiments herein traverse the document a second time to detect which XML nodes have been assessed. Then, embodiments herein retrieve the specific object that was stored on that XML node and use this information to generate the family of pre-evaluated XPath strings. Those strings are then stored in an index together with a pointer to the matching XML node.

For example, when embodiments herein take as input the Path /*derivation*/*entry[@verb=#1[lemma]]* they locate the dynamic part of that expression *#1[lemma]* and replaces it by a meta-variable: *_1:* /*derivation*/*entry[@verb=_1].* If more than one dynamic part is found, then each of these dynamic parts is replaced with another meta-variable:
/*derivation*/*entry[@verb=#1[lemma] and @number=#1[number]] →*
/*derivation*/*entry[@verb=_1 and @number=_2]*

The XML engine then applies this XPath on our XML database and generates all possible strings with the meta-variable _1 and _2 replaced with all actual values found in the XML document. If this method is applied on the short XML document that was given as an example above, the system generates the following strings together with their pointer to the XML node they match:
/*derivation*/*entry[@verb= "arriver"]*
/*derivation*/*entry[@verb= "détruire"]*

When a canonical XPath expression is being evaluated, it is tested against the index. If the evaluation fails, it simply means that this XPath expression does not match any XML node in the database document. No other analysis is required. However, if a new XML node is created on the fly (new XML nodes can only be created with canonical expressions), then the corresponding XPath string, that was used to create it, is stored in the index with the corresponding pointer on the new XML node. Finally, it should be noted that complex XPath expressions that comprise functions, such as *daughter* or *parent,* are still evaluated as regular XPath expressions, and may slow down the whole process.

The index is implemented as a character automaton which is compact and a way of indexing strings. This automaton can be implemented in any form of programming language, such as C++. It has been designed so that the terminal nodes can store pointers that are retrieved when a string has been recognized. Embodiments herein then use this automaton to store XPath expressions with their list of XML pointers (an XPath may match more than one XML node). Below is an example of an automaton that stores the following XPath expressions:
/Dict/Verb/Entree[@lemme="use"]
/Dict/Verb/Entree[@lemme="formulate"]
/Dict/Verb/Entree[@lemme="eat"]
/Dict/Noun/Entree[@lemme="system"]
/Dict/Noun/Entree[@lemme="information"]
/Dict/Noun/Entree[@lemme="dog"]

The automaton below has been built out of the six possible XPath with the attribute @lemma as a variable.

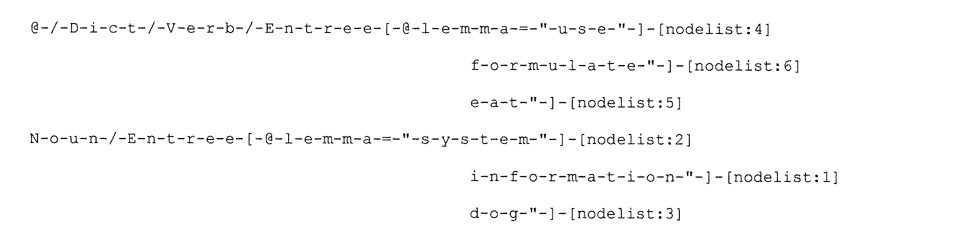

Thus, embodiments herein present a new method to deal with XPath queries in order to speed up their computing efficiency. The method consists of building an automaton for each new instance of a given document to store XPath queries. A new XPath is then always tested first against this automaton before being applied to the document itself. Embodiments herein consider the case where the XPath commands are already known and may be subjected to a pre-processing.

Embodiments herein only take into account absolute XPath. Thus, embodiments herein do not cache the XPath expressions which are relative to an XML node computed at run-time. Further, embodiments herein do not base a solution on a specific XPath engine. Instead, embodiments herein simply suppose that an implementation of an XPath engine exists that can be modified according to the user's needs. For instance, an implementation of the embodiments herein has been made on the basis of libxml. Embodiments herein refer to UnderSpecified XPath (USXP hereafter) as any XPath expressions where specific values (XML markup tag names or attribute values) are replaced with a variable. The embodiments herein also suppose that the XML documents are handled through a Document Object Model or DOM.

More specifically, an Underspecified XPath is an XPath where the dynamic parts are replaced by a variable. Embodiments herein refer to dynamic parts of an XPath, the parts of the XPath which are instantiated at run-time by values extracted by the program processing those XPath.

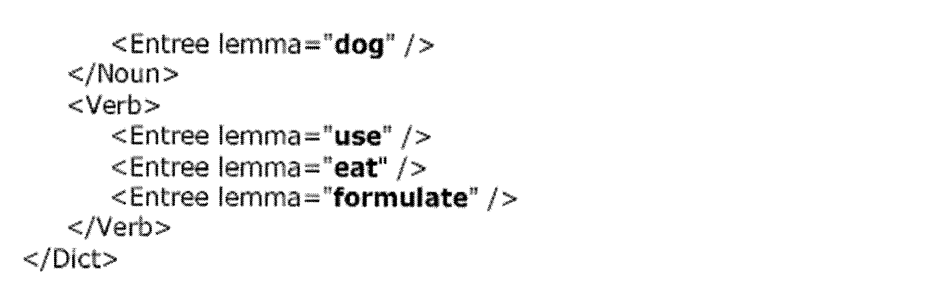

In this example, the XML file models a dictionary that could be queried to find specific information about a given word. This XML file could be queried with the following XPath: /*Dict*/*Noun*/*Entree[@lemma= "dog"].* Now, a system using this XML file would certainly manipulate XPath where the *@lemma* attribute is dynamically generated at run time. This *@lemma* is what embodiments herein refer to a variable part of the XPath expression. Embodiments herein could then build on the basis of this XPath a USXP where the *@lemma* part would be associated to a specific variable:
/*Dict*/*Noun*/*Entree[@lemma= "#1"]*

Examples herein use #n to denote those variables. This denotation is only used here as an example. These variables are instantiated according to the document internal tree structure, which is stored as a Document Object Model or DOM. The DOM is a traditional way of handling XML document markup nodes as objects in programming languages such as C++ or Java. A DOM is a tree-like structure where each node or each attribute is an object. Embodiments herein assume that the structure of these objects is enriched with a specific field that embodiments herein use to mark that a specific XML node or a specific attribute has been identified as being part of a specific underspecified XPath.

As an example the following USXP: /Dict/Noun/Entree[lemma="#1"] is applied to the document. Each DOM object in the system that has been identified as part of the USXP: /Dict/Noun/Entree is then marked.

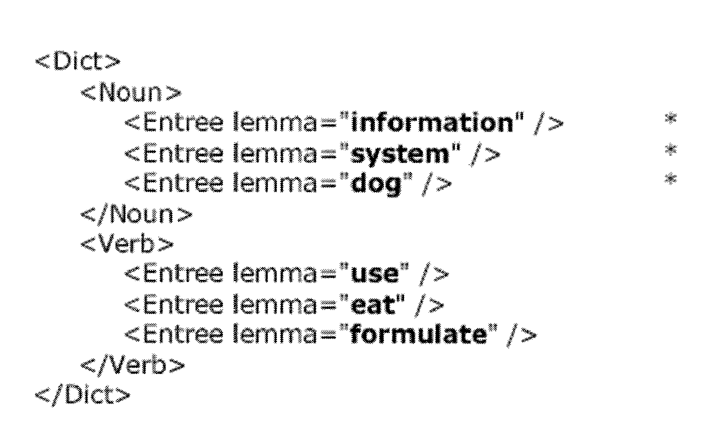

The building of the corresponding XPath implies a simple modification of the XPath engine. Embodiments herein do not modify the process per se; embodiments herein simply introduce specific character strings within the XPath declaration, which are recognized by the XPath engine as variables. For instance, embodiments herein could define a string such as "#1" as a variable with a specific semantics. Each time, a node matches against the part of XPath where a variable is declared; embodiments herein add to the current node a specific mark to indicate that it belongs to the nodes that have been accepted by the XPath engine. This mark in this case is a specific object which records the index of the variable together with the character string corresponding either to the name of the node either to the value of a given attribute.

Now, if embodiments herein apply the XPath engine with a USXP as input, the system yields a list of XML nodes that match that USXP. To recover the different value that embodiments herein need, embodiments herein simply traverse the DOM hierarchy backward, starting on each of the resulting XML nodes. For each node on the way up, embodiments herein check whether it was marked as a possible target for a variable. If it is the case, embodiments herein keep the value of that node (it could be an XML node or an attribute node) in a specific structure, which embodiments herein later use to regenerate the corresponding XPath.

Embodiments herein suppose that the object which is stored for each matching node has the following structure: Structure marking { string value; integer index; } *value* is the value of the node that embodiments herein are interested in. *index* is the index of the variable that was used to mark that node. Each time a node is marked, embodiments herein record a structure with the string embodiments herein are interested in and the index of the variable that does match that node.

One example of an algorithm of this regeneration is given below in pseudo-code. In GenerateXPath, the variables have the following meaning:
a) **"origin"** is one of the nodes yielded by the processing of the UXSP.
b) **"node"** is the current XML node. It is first instantiated with "origin."
c) **"usxp"** is the UXSP that was used to generate the initial list of nodes. In xpath, each variable is a string: "#index", with index being an integer.
d) **"attributes"** is a vector where the strings for each variable are stored according to their index.

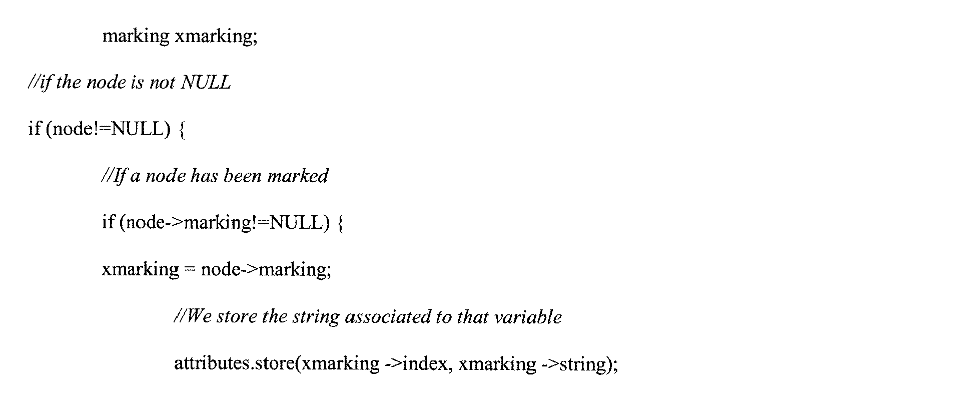

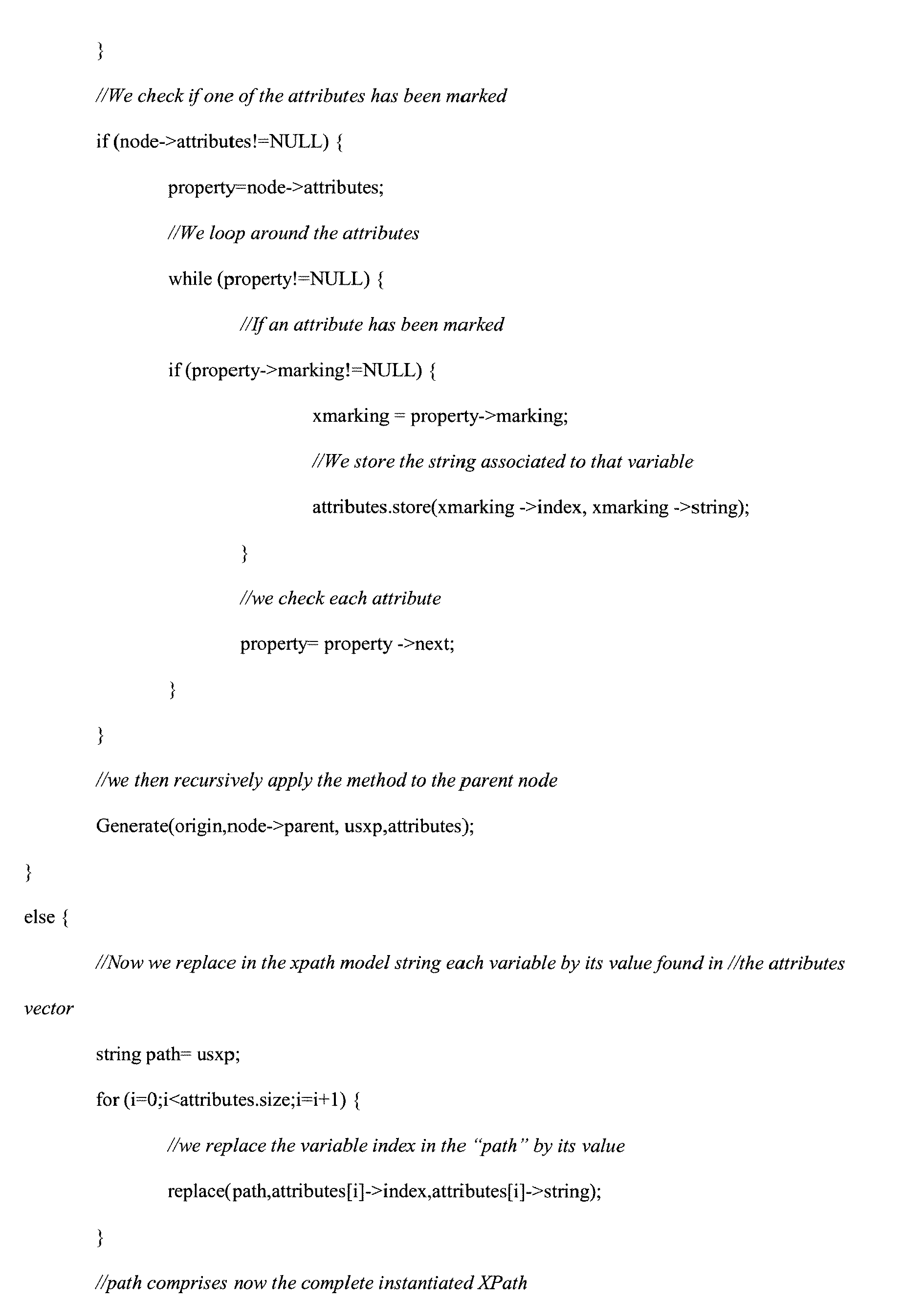

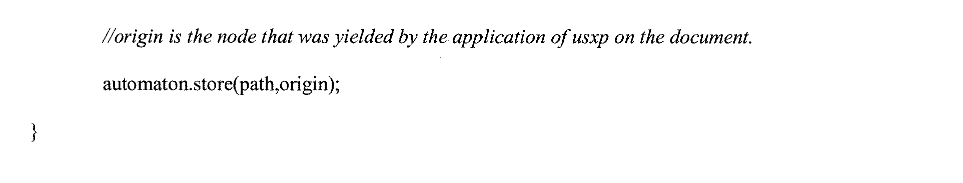

As an example suppose embodiments herein apply the following USXP: /Dict/Noun/Entree[lemma="#1"] on the document. Embodiments herein associate to each XML node a specific marking object:

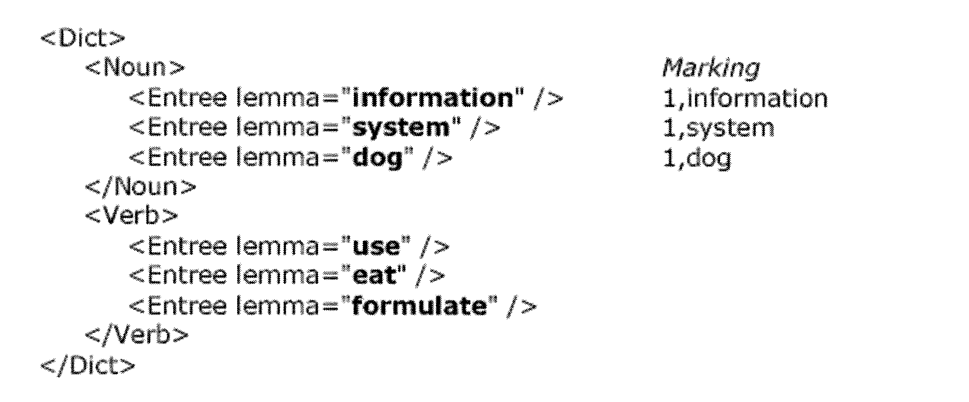

If embodiments herein apply this XPath to the above document, embodiments herein generate a list of three nodes. For each of these nodes, embodiments herein refer to GenerateXPath, which will yield the following XPath strings:
/Dict/NOUN/Entree[lemma="information"]
/Dict/NOUN/Entree[lemma="system"]
/Dict/NOLTN/Entree[lemma="dog"]

In the USXP, each occurrence of "#1" is replaced with its value. Embodiments herein then store in the automaton these XPath together with their resulting node.

When indexing the XML document, embodiments herein have now a list of all possible XPath corresponding to the USXP. Each of these regenerated XPath is a string that embodiments herein can store in an automaton or in a database. This automaton is then used to check first whether an XPath is a valid one. The use of an automaton allows for a compact and fast way to store these strings.

If at run time, the system needs to apply an XPath that has been used to index the XML document, then the first step consists in testing this XPath against the automaton. If this XPath is not recognized, then the query fails, otherwise the list of XML nodes stored in the automaton that has been associated to the string is returned as value.

The automaton below has been built out of the six possible XPath with the attribute @lemma as a variable.

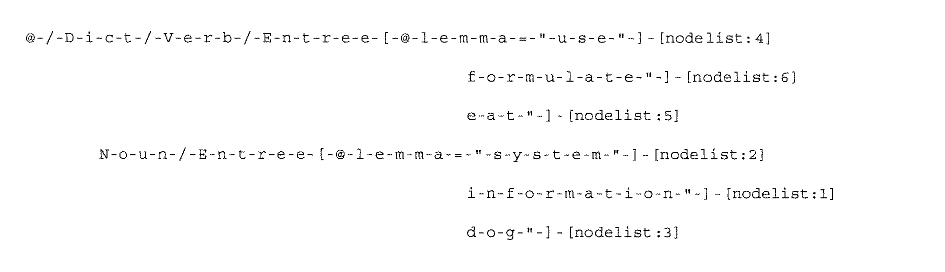

As can be seen in this example, embodiments herein use character automata which only record the character string of the different XPath, without any attempt to parse their inner structure.

Embodiments herein work well with syntactic parsers which take as input any texts (raw text or XML) and apply grammatical rules in an incremental way to linguistic units. While syntactic parsers are discussed in the following example, one ordinarily skilled in the art would understand that the invention is not limited to syntactic parsers, but instead is useful will any indexing arrangement. For example, a linguistic unit may be a sentence, a paragraph or even a whole text, as defined by the grammar itself. For instance, a document of four paragraphs and a hundred sentences can be treated in:
a) One step, if the grammar applies to the whole document;
b) Four steps if the grammar applies to each paragraph;
c) A hundred steps if the grammar applies to each sentence.

Syntactic parsers offer different sorts of output such as an XML output, a C++ object structure (if the system is used as a library), or a more traditional output with the chunk tree as a parenthesized structure and a list of dependencies bearing on the nodes of the chunk tree. Rules are applied one after the other, to determine whether a rule succeeds or fails. Since the system never backtracks on any rules, the embodiments herein cannot propel themselves into a combinatorial explosion.

The parsing can be done in three different stages:
1) Part-of-speech disambiguation together with chunking.
2) Extraction of dependencies between words on the basis of regular expressions over the chunk sequence.
3) Combination of those dependencies with Boolean operators to generate new dependencies, or to modify or delete existing dependencies.

The following is an example of a sentence treated by embodiments herein with some of the dependencies that are extracted from different part of a chunk tree. The chunking rules define and produce a chunk tree.

### Stage 1

In a first stage, chunking rules are applied and the following chunk tree is generated for a sentence.

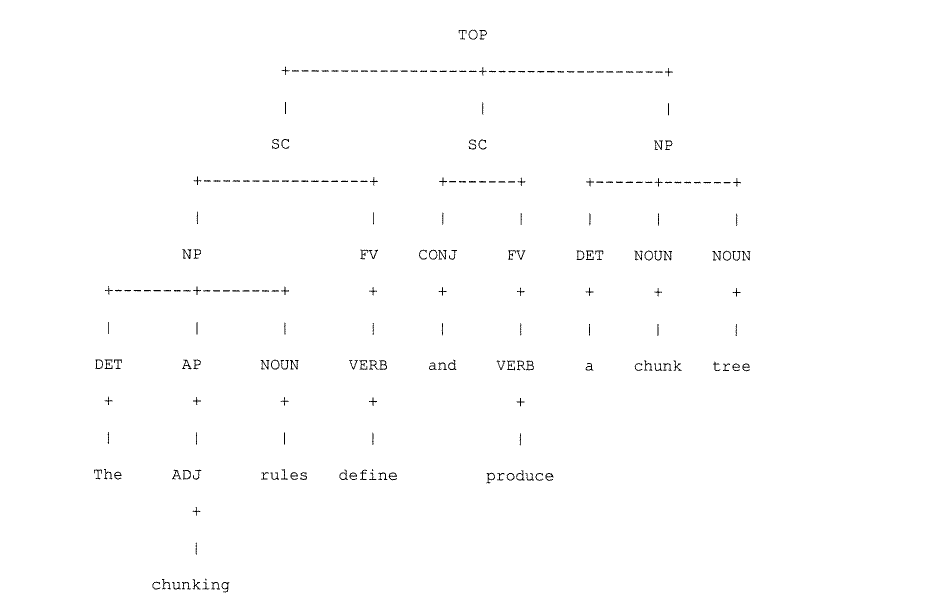

### Stage 2

The next step consists in extracting some basic dependencies on that tree. Those dependencies are extracted with some very basic rules that only connect nodes that occur in a specific sub-tree configuration.
SUBJ(define,rule)
VCOORD(define,produce)

SUBJ is a subject relation and VCOORD is a coordination between two verbs. A typical rule to extract the subject 1 is:
|NP{?*, noun#1}, FV{verb#2}| SUBJ(#2,#1).

Where #1 and #2 are two variables that are associated with the lexical sub-nodes of a noun phrase (NP) and a finite verb (FV) that are next to each other. The "NP {...}" denotes an exploration of the sub-nodes under the node NP.

### Stage 3

In the last stage, a simple Boolean expression is used to generate new dependencies on the basis of the dependencies that have been extracted so far.

For instance, embodiments herein generate the following dependency:
SUBJ(produce,rule)

With the following rule:
If (SUBJ(#2_VERB,#1_NOUN) & VCOORD(#2_VERB,#3_VERB)) SUBJ(#3,#1).

This rule reads as follow: if a subject has been extracted for a verb (#2) and a noun (#1), and a verb coordination has been found between this verb (#2) and some other verb (#3), then #3 shares the same subject as #2.

Together with these typical grammar rules, embodiments herein provide a specialized programming language which directly hooks on the output of the grammar rules. The embodiments herein take advantage of the inner linguistic data structure that is built out of a sentence to quickly access these linguistic data. This programming language offers different flavors of variables (integer, float, strings, arrays, structures) and a large set of instructions that ranges from number crunching to string manipulations. This language also offers a rich set of XML instructions. For instance, it is possible to test the nature of the current XML node under scope when an XML file is being parsed or to create an XML file on the fly from linguistic pieces. Furthermore, script instructions can mix with grammatical rules which allow grammarians to introduce in their rules some extra-manipulations that would be otherwise difficult to process. For instance, one can keep track in an array of all the NPs that were found so far in a text and use this information to find the most probable antecedent of a given anaphoric pronoun. Embodiments herein describe in the next section how embodiments herein benefit from this script language to use XML documents as databases.

The goal of syntactic parsers is eventually to compute syntactic dependencies, such as *subject* or *direct object* between the nodes of the chunking tree. Embodiments herein start with a translation of the linguistic unit into a sequence of part of speech. In a first pass, this sequence is disambiguated and chunked. In a second pass, the previous result is transmitted to regular expressions that extract basic dependencies between words, according to their configuration in the chunk tree. In a last pass, deduction rules mesh together those dependencies in order to trigger the creation of new dependencies. Those deduction rules can also modify or delete existing dependencies.

The XPath are at the core of most XML systems. For instance, one conventional system queries documents with XPath. In a first step the XML document is stored and indexed in a database. The XPath are then translated into SQL queries to retrieve information from these documents. The process is complex and cannot be used to stream XML documents.

Other conventional methods use bottom-up algorithms to analyze an XPath starting from the leaves and going up to the top node. However, these methods have all in common a full analysis of an XPath at run time whose results is then tested directly against the XML documents or improved with some indexing methods to speed up the process of checking out certain nodes beforehand.

The embodiments herein, in the converse, do apply an underspecified XPath once for all on the document in a single pass, which reduces the application of a full family of XPath to one single instruction. The translation into a character automaton by embodiments herein insures that the speed of applying a specific XPath will not drive the system to a new XPath document traversal, which would be highly inefficient.

Most research teams have tried to improve the traversal of the tree, through multiple indexing in order to speed up the process, but their indexing mechanism is often quite complex and heavy as it consists in complex tables with multiple indexing.

The use of tree automaton has already been described in the literature; and these automata are used as a way to encode the parsing of the XPath expression or as a way to encode already found sub-sequences. However, one should not confuse tree automata with string automata. A tree automaton is a method to process a complex expression such an arithmetic expression in a structure that is easily executed, while a character automaton is just an efficient way to store and extract large number of strings, without imposing any interpretation of these strings.

The embodiments herein do not impose any deciphering of the XPath expression, which is kept as a string during the whole process. This is one of many differences when compared to conventional systems, which utilize these automata as a way to comprehend the XPath expression in order to process it. Embodiments herein do not process this XPath expression; rather embodiments herein compare its surface string against a character automaton. Embodiments herein can also compute equivalent XPath on the fly for a given XPath and then store the underspecified strings in automaton, paving the way for automatic treatments of family of XPath. Embodiments herein introduce the notion of underspecified expression applied to the document itself. The notion of XPath here is enlarged with variables, with a specific task which is to extract a family of XPath, rather than a simple XPath. Also, the encoding of the generated XPath strings into an automaton ensures a quick and efficient way to test the existence of an answer for that XPath, and an efficient retrieval of the nodes stored in the automaton.

The performance of natural language tool-like embodiments herein is based, in large part, on the richness of information to which such a system may have access. However, the access to a variety of sources of information is usually limited by the way this information is stored. Quite often, programmars prefer to limit the way their software acquires external information to only a few limited bridges, in order to simplify the architecture of their system, which would become extremely heavy otherwise. The choice of XML lies in those limits. XML is a generic container which can be used to store any sorts of structured data in a text file that is both readable by a machine and human being. If XML is verbose and space consuming, it has the advantage of being simple. Today most database or word processors provide mechanisms to automatically export various sources of data in this format. However, the use of XML to extract information is not straightforward as XPath is slow and inefficient. The embodiments here use a simple caching mechanism based on XPath coupled with an automaton to improve the performance of the system in a dramatic way. This mechanism proves that XML database can be easily exploited in a natural language tool and provides a rich and powerful source of data in any situation.

## Claims

1. A method comprising:
analyzing at least one extensible markup language (XML) application to produce a listing of extensible markup language path language (XPath) strings produced by said application;
processing said XPath strings to create one or more underspecified XPath (USXP) strings, wherein said USXP strings each include one or more variables;
indexing an XML document using said USXP strings to produce an automaton;
receiving an XPath query; and
processing said XPath query through said automaton.

2. The method in claim 1, wherein said processing of said XPath query through said automaton comprises determining if said XPath query matches an XPath string within said automaton.

3. The method in claim 1, wherein said indexing of said XML document produces an index within said automaton.

4. The method in claim 3, further comprising referencing said index of said automaton to reveal matching XML document nodes corresponding to an XPath string within said automation matching said XPath query.

5. The method in claim 1, wherein said indexing associates one or more marking objects with each of said variables within said USXP strings, wherein said marking objects comprise node data that said variables represent.

6. The method in claim 5, wherein said processing of said XPath query through said automaton comprises substituting said marking objects for said variables.

7. The method in claim 1, wherein said variables comprise meta-variables.

8. A method comprising:
analyzing at least one extensible markup language (XML) grammar rule to produce a listing of extensible markup language path language (XPath) strings produced by said grammar rule;
processing said XPath strings to create one or more underspecified XPath (USXP) strings, wherein said USXP strings each include one or more variables;
indexing an XML document using said USXP strings to produce an automaton;
receiving an XPath query; and
processing said XPath query through said automaton.

9. The method in claim 8, wherein said processing of said XPath query through said automaton comprises determining if said XPath query matches an XPath string of said automaton.

10. A method comprising:
analyzing at least one syntactic parser to produce a listing of strings produced by said parser;
processing said strings to create one or more underspecified strings, wherein said underspecified strings each include one or more variables;
indexing a document using said underspecified strings to produce an automaton;
receiving a query; and
processing said query through said automaton.
